# FASCICULE DE BREVET EUROPEEN

(11) **EP 3 493 663 B1**
(45) Date de publication et mention de la délivrance du brevet: **03.06.2020**
(21) Numéro de dépôt: 17736998.0
(22) Date de dépôt: 21.06.2017
(51) Int. Cl.: A01D 34/58, A01D 34/86

(54) **DISPOSITIF DE FAUCHAGE DE TYPE ÉPAREUSE COMPORTANT UN ÉQUIPEMENT DE COUPE/BROYAGE MIS EN ACTION À L'AIDE D'UN MOTEUR ÉLECTRIQUE**
RANDSCHNEIDENDE MÄHERVORRICHTUNG MIT EINEM TEIL EINER SCHNEID-/MAHLAUSRÜSTUNG, DIE MITHILFE EINES ELEKTROMOTORS BETRIEBEN WIRD
VERGE-CUTTING MOWER DEVICE COMPRISING A PIECE OF CUTTING/GRINDING EQUIPMENT ACTUATED USING AN ELECTRIC MOTOR

(30) Priorité: 02.08.2016 FR 1657505
(43) Date de publication de la demande: 12.06.2019
(73) Titulaire: Rousseau, 69250 Neuville-sur-Saone (FR)
(72) Inventeur: COURTINE, Matthieu, 01260 Vieu (FR); DAUDRE, Guillaume, 69370 Saint Didier au Mount d'Or (FR)
(74) Mandataire: Cabinet Netter
(86) Numéro de dépôt international: PCT/FR2017/051647
(87) Numéro de publication internationale: WO 2018/024952

(56) Documents cités:
- WO-A2-97/28681
- GB-A- 2 475 332
- US-A- 3 032 956
- US-A- 3 085 385
- US-A1- 2008 264 026
- US-A1- 2009 188 225
- US-A1- 2012 112 568
- US-B1- 6 487 837

## Description

La présente invention se rapporte à un dispositif de fauchage de type épareuse, par exemple pour l'entretien des bords de routes, et à une machine agricole automotrice munie d'un tel dispositif.

Les machines agricoles utilisées pour faucher ou débroussailler les abords des routes, notamment les talus d'autoroutes, comprennent de manière générale au moins un châssis monté sur roues, une cabine, une prise de force arrière et/ou avant et un équipement destiné à la tonte ou au broyage de végétaux. Cet équipement est monté selon le type de machine agricole ou l'utilisation, sur le côté du châssis, à l'avant ou à l'arrière, et comporte par exemple un bras pivotant et articulé de manière à pouvoir s'allonger et supportant un équipement de coupe/broyage tel qu'une tête de débroussaillage ou un lamier de coupe de branches. Habituellement, l'équipement de coupe/broyage est mis en action (rotation d'outils de coupe) à l'aide d'un moteur de type hydraulique.

Cependant, ce type de dispositif ne donne pas entièrement satisfaction. En effet, les moteurs hydrauliques utilisés sont polluants, difficiles à refroidir, et complexes à entretenir.

Le document US 3 032 956 décrit une épareuse automotrice selon le préambule de la revendication 1.

Un but de la présente invention est donc de résoudre les problèmes cités précédemment à l'aide d'une solution simple à mettre en œuvre et à entretenir, très peu polluante, fiable, compacte, fournissant une puissance maximum utilisable instantanément et avec un excellent rendement.

Pour cela, l'invention a pour objet un dispositif de fauchage de type épareuse selon la revendication 1.

L'invention va maintenant être décrite plus en détail en référence à des modes de réalisation particuliers donnés à titre d'illustration uniquement et représentés sur les figures annexées dans lesquelles :
- La figure 1 est une vue en perspective isométrique d'une machine agricole conforme à la présente invention
- La figure 2 est une vue de dessus de la figure 1 ;
- La figure 3 est une vue de détail en perspective isométrique de la figure 1 montrant un dispositif de fauchage de la machine agricole ; et
- La figure 4 est une vue schématique du dispositif de fauchage.

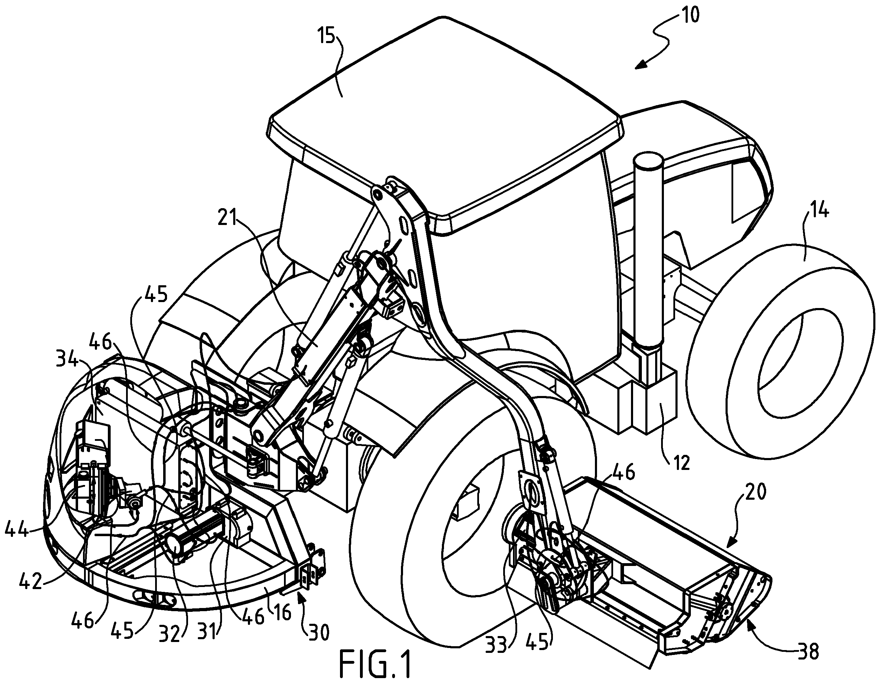

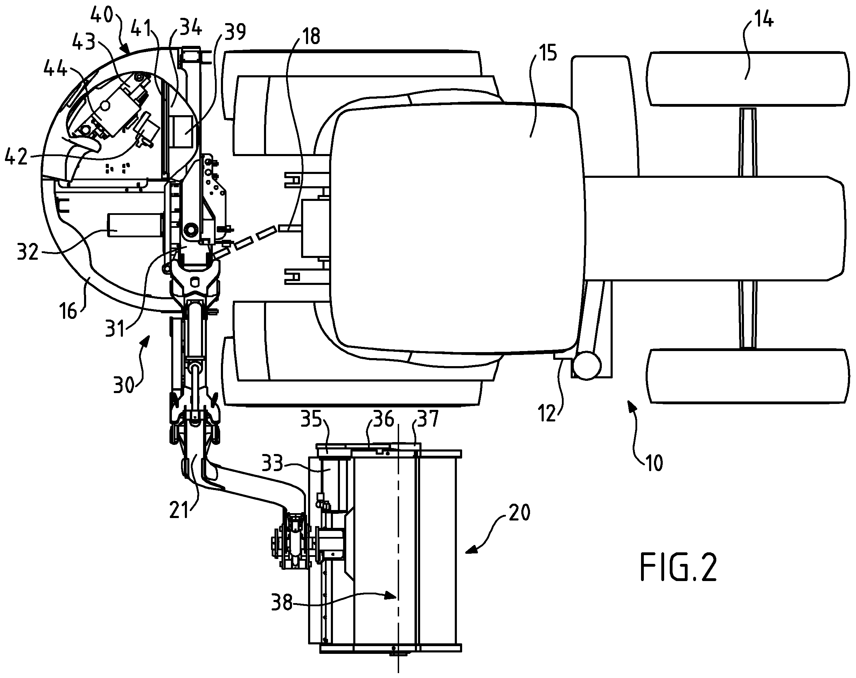

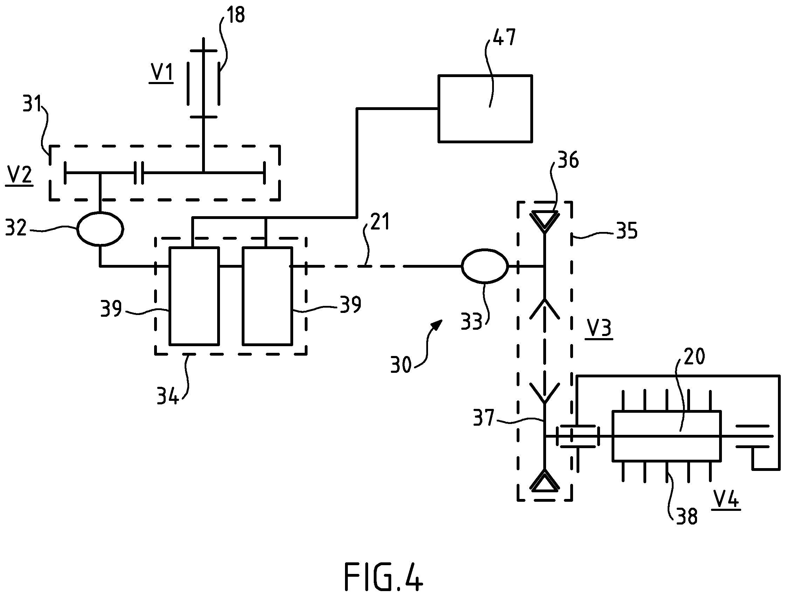

Les figures 1 et 2 représentent une machine agricole automotrice 10, telle qu'un tracteur, comportant globalement un châssis 12, des roues 14, une cabine 15, un bâti arrière 16, une prise de force arrière rotative 18 (schématisée sur la figure 4) et un équipement de coupe/broyage 20 monté sur un bras mobile/articulé 21.

La machine 10 comporte également un système 30 de commande et d'entraînement de l'équipement de coupe/broyage 20 faisant plus précisément l'objet de la présente invention.

Comme cela est visible sur le schéma de la figure 4, ce système 30 est connecté à la prise de force arrière 18 commune à la majorité des machines agricoles telles que les tracteurs. Cette prise de force 18 est habituellement mise en rotation par le moteur thermique du tracteur 10 et sert à l'entraînement de divers accessoires de type connus, en particulier des outils de fauchage.

Dans le cas présent, la prise de force 18 entraîne un multiplicateur 31 destiné à multiplier la vitesse de rotation d'entrée V1 d'environ 500 à 1000 tr/min pour arriver à une vitesse de sortie V2 d'environ 2500 à 5000 tr/min.

Le multiplicateur 31 est relié en sortie à l'entrée d'une génératrice de courant 32 qui fournit une puissance électrique de sortie d'environ 15 à 50kW, par exemple entre 25 et 40kW.

La génératrice électrique 32 est ensuite reliée à un moteur électrique 33 par l'intermédiaire de câblages et d'une armoire électrique 34 comprenant au moins un variateur 39.

Une interface homme machine 47, typiquement disposée dans la cabine 15, permet à un opérateur de commander le dispositif de fauchage.

Le moteur électrique 33 fournit une puissance électrique de sortie d'environ 15 à 50 kW, par exemple 25 à 40KW. Ce moteur électrique 33, implanté directement sur l'équipement de coupe/broyage 20, est relié en sortie à un système d'entraînement comportant par exemple une poulie d'entraînement 35, entraînant une poulie entraînée 37, au moyen d'une courroie de transmission 36. En sortie du moteur électrique 33, la courroie 36 peut par exemple tourner à une vitesse V3 de 3000 à 4500 tr/min tandis que l'équipement de coupe/broyage 20 et les outils de coupe 38 tournent à une vitesse V4 de 2000 à 3000 tr/min grâce à un moyen de réduction. Le moyen de réduction peut être réalisé par une différence entre les diamètres des poulies 35 et 37.

Le bâti arrière 16 de la machine agricole 10 supporte également des moyens de refroidissement 40 d'un ou plusieurs des éléments parmi la génératrice de courant 32, le moteur électrique 33 et le variateur 39. En cas de besoin, les moyens de refroidissement 40 pourraient encore permettre de refroidir d'autres éléments.

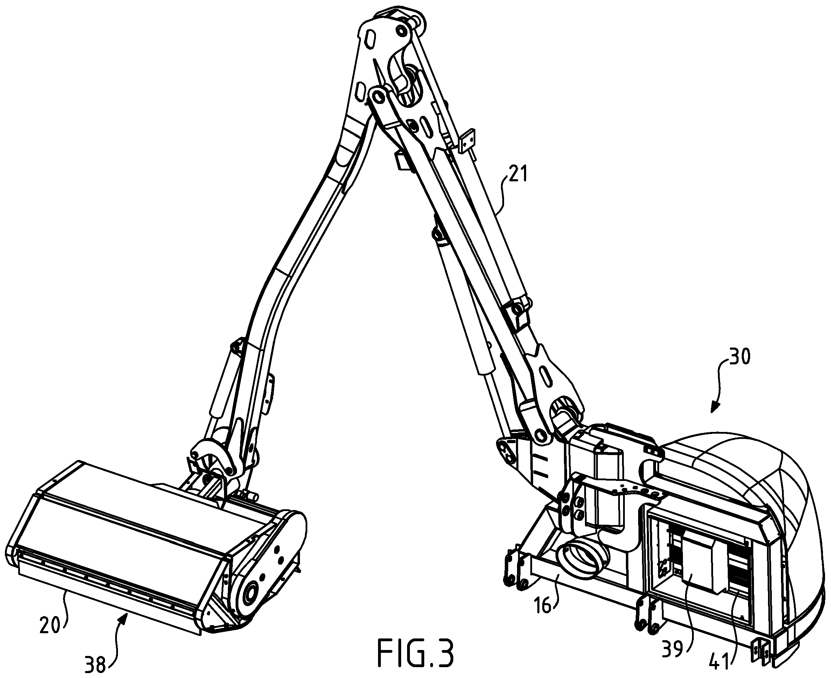

Ces moyens de refroidissement 40, illustrés schématiquement sur les figures 2 et 3, comportent un échangeur thermique solide/eau glycolée 41, une pompe à eau glycolée 42, un refroidisseur 43, un vase d'expansion 44 contenant ladite eau glycolée et des conduites de liquide froid 45 et chaud 46 entrant/sortant des éléments à refroidir.

Le fonctionnement du dispositif 30 de commande et d'entraînement de l'équipement de coupe/broyage 20 est extrêmement simple et fiable puisque c'est la prise de force 18 qui engendre la production d'électricité par l'intermédiaire de la génératrice 32 afin d'alimenter le moteur 33 en courant.

Cette solution permet de réduire le poids et l'encombrement de la machine agricole 10 par rapport à l'art antérieur, en particulier de l'équipement de coupe/broyage 20 et de son système de commande et d'entraînement 30. L'utilisation d'un moteur électrique 33 accompagné de sa génératrice de courant 32 permet de réduire notablement le bruit et la pollution du système de commande et de l'équipement, tout en procurant un couple identique ou supérieur, disponible très rapidement. L'utilisation d'une technologie électrique permet de plus de créer une liaison flexible entre la prise de force 18 et l'équipement de coupe/broyage 20. Il est aisé de disposer une régulation et/ou un asservissement permettant de proposer un réglage aisé de la vitesse de rotation des outils de coupe 38 indépendamment de la vitesse de rotation de la prise de force 18. Ceci offre une souplesse d'utilisation, une ergonomie améliorée, une grande fiabilité, un excellent rendement, en permettant des économies d'énergie.

Il doit être bien entendu que la description détaillée de l'objet de l'Invention, donnée uniquement à titre d'illustration, ne constitue en aucune manière une limitation, les équivalents techniques étant également compris dans le champ de la présente invention.

Ainsi, les moyens de refroidissement 40 peuvent comporter en alternative un refroidisseur fluide/air en serpentin à la place du refroidisseur air/eau glycolée 43. Le fluide de refroidissement est avantageusement biodégradable.

La génératrice 32 peut être montée directement sur la machine agricole 10, ce qui permet notamment de se passer de l'utilisation de la prise de force 18 et du multiplicateur 31.

## Revendications

1. Dispositif de fauchage de type épareuse (20, 30), par exemple pour l'entretien des bords de routes, comportant au moins un bâti (16) destiné à être monté sur une machine agricole automotrice (10) et sur lequel est monté un équipement de coupe/broyage (20), destiné à la tonte ou au broyage de végétaux, mis en action à l'aide d'un moteur électrique (33) relié à une génératrice de courant (32) pour lui fournir l'énergie électrique dont il a besoin, **caractérisé en ce que**
- l'équipement de coupe/broyage (20) est relié au bâti (16) par un bras articulé (21),
- la génératrice de courant (32) est montée sur le bâti (16) et est reliée à une prise de force (18) de la machine agricole automotrice (10) par l'intermédiaire d'un multiplicateur (31),
- le moteur électrique (33) est implanté directement sur l'équipement de coupe/broyage (20),
- le moteur électrique (33) entraîne l'équipement de coupe/broyage (20) via un système d'entraînement comportant une poulie d'entraînement (35) entraînant une poulie entraînée (37) au moyen d'une courroie de transmission (36),
- le dispositif de fauchage comporte au moins un variateur (39) intégré dans le circuit électrique comprenant notamment la génératrice de courant (32) et le moteur électrique (33) de l'équipement de coupe/broyage (20),
le variateur (39) étant disposé entre la génératrice de courant (32) et le moteur électrique (33) de l'équipement de coupe/broyage (20), et
- le dispositif de fauchage comprend des moyens de refroidissement (40) par un fluide caloporteur pour refroidir au moins l'un des éléments suivants : la génératrice de courant (32), le moteur électrique (33) et le variateur (39),
les moyens de refroidissement (40) comprenant un échangeur thermique (41), une pompe (42), un refroidisseur (43) et un vase d'expansion (44) montés sur le bâti (16), une conduite de liquide froid (45) et une conduite de liquide chaud (46).

2. Dispositif de fauchage selon la revendication 1, dans lequel le fluide caloporteur est biodégradable.

3. Dispositif de fauchage selon la revendication 2, dans lequel le refroidissement est effectué par l'intermédiaire d'un circuit de fluide glycolé et dans lequel le refroidisseur (43) est de type air/eau glycolée.

4. Dispositif de fauchage selon l'une quelconque des revendications précédentes, **caractérisé en ce que** la génératrice de courant (32) produit plusieurs dizaines de kW, par exemple entre environ 15kW et 50kW, avantageusement environ 25 à 40kW.

5. Dispositif de fauchage selon l'une des revendications précédentes, dans lequel les moyens de refroidissement (40) refroidissent la génératrice de courant (32), le moteur électrique (33) et le variateur (39).

6. Dispositif de fauchage selon l'une des revendications précédentes, dans lequel le variateur (39) est monté sur le bâti (16) .

7. Dispositif de fauchage selon l'une des revendications précédentes dans lequel la génératrice électrique est reliée au moteur électrique (33) par l'intermédiaire de câblages et d'une armoire électrique (34) comprenant seulement un ou deux variateurs (39) .

8. Machine agricole (10) de type automotrice pour l'entretien des bords de route, comportant un dispositif de fauchage selon l'une quelconque des revendications précédentes.

## Patentansprüche

1. Randschneidende Mähvorrichtung (20, 30) beispielsweise zur Pflege der Straßenränder, mindestens einen Rahmen (16) beinhaltend, der dazu bestimmt ist, auf einer selbstfahrenden landwirtschaftlichen Maschine (10) montiert zu werden, und auf der eine Schneid-/Mahlausrüstung (20) montiert ist, die zum Mähen oder zum Mahlen von Pflanzen bestimmt ist, mithilfe eines Elektromotors (33) in Betrieb gesetzt, der mit einem Stromgenerator (32) verbunden ist, um ihm die elektrische Energie bereitzustellen, die er benötigt, **dadurch gekennzeichnet, dass**
- die Schneid-/Mahlausrüstung (20) durch einen Gelenkarm (21) mit dem Rahmen (16) verbunden ist,
- der Stromgenerator (32) auf dem Rahmen (16) montiert ist, und anhand eines Multiplikators (31) mit einer Zapfwelle (18) der selbstfahrenden landwirtschaftlichen Maschine (10) verbunden ist,
- der Elektromotor (33) direkt in der Schneid-/Mahlausrüstung (20) eingebaut ist,
- der Elektromotor (33) die Schneid-/Mahlausrüstung (20) über ein Antriebssystem antreibt, das eine Antriebsscheibe (35) beinhaltet, die anhand eines Antriebsriemens (36) eine angetriebene Scheibe (37) antreibt,
- die Mähvorrichtung mindestens einen Regler (39) beinhaltet, der in dem Stromkreis integriert ist, der insbesondere den Stromgenerator (32) und den Elektromotor (33) der Schneid-/Mahlausrüstung (20) umfasst,
wobei der Regler (39) zwischen dem Stromgenerator (32) und dem Elektromotor (33) der Schneid-/Mahlausrüstung (20) disponiert ist, und
- die Mähvorrichtung Kühlmittel (40) durch eine Wärmeträgerflüssigkeit zum Kühlen mindestens eines der folgenden Elemente umfasst: den Stromgenerator (32), den Elektromotor (33) und den Regler (39),
wobei die Kühlmittel (40) einen Wärmetauscher (41), eine Pumpe (42), einen Kühler (43) und ein Ausdehnungsgefäß (44), die auf dem Rahmen (16) montiert sind, eine Leitung für kalte Flüssigkeit (45) und eine Leitung für heiße Flüssigkeit (46) umfassen.

2. Mähvorrichtung nach Anspruch 1, wobei die Wärmeträgerflüssigkeit biologisch abbaubar ist.

3. Mähvorrichtung nach Anspruch 2, wobei die Kühlung anhand eines Glykolflüssigkeitskreislaufs durchgeführt wird und wobei der Kühler (43) ein Luft-/Glukolwasserkühler ist.

4. Mähvorrichtung nach einem der vorstehenden Ansprüche, **dadurch gekennzeichnet, dass** der Stromgenerator (32) mehrere 10 kW, beispielsweise zwischen etwa 15 kW und 50 kW, vorteilshalber etwa 25 bis 40 kW erzeugt.

5. Mähvorrichtung nach einem der vorstehenden Ansprüche, wobei die Kühlmittel (40) den Stromgenerator (32), den Elektromotor (33) und den Regler (39) kühlen.

6. Mähvorrichtung nach einem der vorstehenden Ansprüche, wobei der Regler (39) auf dem Rahmen (16) montiert ist.

7. Mähvorrichtung nach einem der vorstehenden Ansprüche, wobei der Stromgenerator anhand von Verdrahtungen und von einem Schaltkasten (34), der nur einen oder zwei Regler (39) umfasst, mit dem Elektromotor (33) verbunden ist.

8. Selbstfahrende landwirtschaftliche Maschine (10) zur Pflege von Straßenrändern, eine Mähvorrichtung nach einem der vorstehenden Ansprüche beinhaltend.

## Claims

1. A verge-cutting mower device (20, 30), for example for the upkeep of roadsides, comprising at least one frame (16) which is designed to be fitted on an automotive agricultural machine (10), and on which there is fitted a cutting/grinding equipment (20), designed to mow or grind plants, actuated by means of an electric motor (33) connected to a current generator (32) in order to provide it with the electrical energy it needs, **characterized in that**
- the member of cutting/grinding equipment (20) is connected to the frame (16) by an articulated arm (21),
- the current generator (32) is fitted on the frame (16), and is connected to a power take-off (18) of an agricultural machine by means of a multiplier (31),
- the electric motor (33) is implanted directly on the cutting/grinding equipment (20),
- the electric motor (33) drives the cutting/grinding equipment (20), via a drive system comprising a drive pulley (35) which drives a driven pulley (37) by means of a drive belt (36),
- the verge-cutting mower device comprises at least one variator (39) integrated in the electrical circuit, comprising in particular the current generator (32) and the electric motor (33) of the piece of cutting/grinding equipment (20),
the variator (39) being disposed between the current generator (32) and the electric motor (33) of the cutting/grinding equipment (20), and
- the verge-cutting mower device comprises means (40) for cooling by means of a coolant fluid at least one of the following elements: the current generator (32), the electric motor (33) and the variator (39),
the means (40) for cooling comprise a exchanger (41), a pump (42), a cooler (43), an expansion vessel (44) mounted on the frame (16), a cold liquid duct (45) and a hot liquid duct (46).

2. The device as claimed in claim 1, **characterized in that** the coolant fluid is biodegradable.

3. The mowing device as claimed in claim 2, **characterized in that** the cooling is carried out by means of a glycolated fluid circuit and **in that** the cooler (43) is of the air/glycolated water type.

4. The mowing device as claimed in any of the preceding claims, **characterized in that** the current generator (32) produces several tens of kW, for example between approximately 15 kW and 50 kW, and advantageously approximately 25 to 40 kW.

5. The mowing device as claimed in any of the preceding claims, **characterized in that** the means (40) for cooling are cooling the current generator (32), the electric motor (33) and the variator (39).

6. The mowing device as claimed in any of the preceding claims, **characterized in that** the variator (39) is mounted on the frame (16) .

7. The mowing device as claimed in any of the preceding claims, **characterized in that** the electric generator is connected to the electric motor (33) by means of cables and an electrical control box (34) comprising only one or two variators (39).

8. An agricultural machine (10) of the automotive type for the upkeep of roadsides, comprising a mowing device as claimed in any one of the preceding claims.
